# EUROPÄISCHE PATENTSCHRIFT

(11) **EP 0 628 224 B1**
(45) Veröffentlichungstag und Bekanntmachung des Hinweises auf die Patenterteilung: **02.01.1997**
(21) Anmeldenummer: 93904029.1
(22) Anmeldetag: 26.02.1993
(51) Int. Cl.: H02K 5/128, H02K 7/14

(54) **ELEKTRISCHE PUMPE**
ELECTRIC PUMP
POMPE ELECTRIQUE

(30) Priorität: 26.02.1992 DE 4205926
(43) Veröffentlichungstag der Anmeldung: 14.12.1994
(73) Patentinhaber: Magnet-Motor Gesellschaft für magnetmotorische Technik mbH, D-82319 Starnberg (DE)
(72) Erfinder: HEIDELBERG, Götz, D-8136 Starnberg (DE); EHRHART, Peter, D-8000 München 70 (DE)
(74) Vertreter: Klunker . Schmitt-Nilson . Hirsch
(86) Internationale Anmeldenummer: EP9300455
(87) Internationale Veröffentlichungsnummer: WO9317484

(56) Entgegenhaltungen:
- EP-A- 0 161 712
- EP-A- 0 282 755
- WO-A-90/13937
- DE-B- 1 053 647
- DE-B- 2 245 009
- GB-A- 1 218 724
- GB-A- 2 116 373
- US-A- 4 086 508
- US-A- 4 339 874
- US-A- 4 877 985

## Beschreibung

Gegenstand der Erfindung ist eine elektrische Pumpe, mit einem Pumpenrad, das über eine Welle mit mindestens einem Permanentmagnet-Rotor eines Elektromotors gekoppelt ist, einem hermetisch abgeschlossenen Gehäuse, in welchem die Welle gelagert ist, und das als Öffnungen den druckseitigen und den saugseitigen Anschluß für das Pumpgut aufweist, wobei der Rotor im Inneren und die Statorteile des Stators des Elektromotors außerhalb des Gehäuses angeordnet sind,
dadurch gekennzeichnet,
daß die Statorteile in einem oder mehreren an dem Gehäuse befestigten Statorträgern befestigt sind, der bzw. die jeweils einstückig derart ausgebildet sind, daß sie das Gehäuse über den gesamten Umfang, vorzugsweise einschließlich einer Stirnseite des Gehäuses, topfförmig umschließen, und daß der bzw. die Statorträger eine Flüssigkeitskühlung für die Statorteile aufweisen.

Eine Pumpe gemäß dem Oberbegriff des Anspruchs 1 ist aus dem Dokument GB-A-1 218 724 bekannt. Es ist ferner bekannt, bei einem elektrischen Pumpenmotor die Statorwicklung mittels Flüssigkeit zu kühlen (DE-B-1 053 647).

Die Erfindung eignet sich speziell für leistungsstarke Pumpen mit einer elektrischen Leistung im Bereich von 10 kW und darüber.

Es gibt besondere gesetzliche Vorschriften über die Auslegung von Pumpen, insbesondere solchen Pumpen, die für umweltbelastende Fluide eingesetzt werden. Es muß gewährleistet sein, daß ein Austritt der umweltgefährdenden Fluide verhindert wird. Dies wirft spezielle Probleme bei der Abdichtung von Wellendurchführung auf. Die erfindungsgemäße Pumpe läßt sich mühelos in Rohrleitungssysteme ohne spezielle Lagerungen einbauen läßt, und durch Vermeidung von Wellendurchführungen im Gehäuse ist der Austritt von Pumpgut zuverlässig verhindert. Die das Pumpenrad antreibende Welle tritt an keiner Stelle aus dem Gehäuse aus. Man erreicht eine besonders kompakte Bauweise des Gehäuses.

Natürlich müssen die Statorteile des Stators derart positioniert sein, daß eine Wechselwirkung zwischen Stator und Rotor erfolgen kann. In einer speziellen Ausführungsform sieht die Erfindung vor, daß der Rotor aus über den Wellenumfang verteilt angeordneten, radial orientierten Dauermagnetpolen wechselnder Polarität besteht und daß der Stator als axial mit dem Rotor ausgerichteter, ferromagnetischer Ring mit Spulenwicklungen außen auf der Gehäusewand gelagert ist.

Im einfachsten Fall ist nur ein einziger Rotor in Verbindung mit einem einzigen Stator vorhanden. Zur Erhöhung der Antriebsleistung können auch mehrere Rotoren axial versetzt auf der Antriebswelle sitzen, wobei dann außerhalb des Gehäuses eine entsprechende Anzahl von Statoren vorhanden ist.

Zwischen dem Außenumfang des Rotors und dem Innenumfang des Stators soll natürlich ein möglichst geringer Spalt vorhanden sein. Hierzu wird das Gehäuse zwischen Rotor und Stator so dünn wie möglich ausgebildet. Die Dicke des Gehäuses zwischen Rotor und Stator kann unterhalb von 10 mm, vorzugsweise unter 5 mm, liegen.

Das Gehäuse kann praktisch aus einem Guß bestehen. Aus fertigungstechnischen Gründen kann z.B. ein etwa zylindrisches Gehäuse in zwei Längshälften unterteilt hergestellt werden, wobei die Längshälften dann nach dem Einbau der Teile in das Gehäuse zusammengeschweißt oder zusammengeschraubt werden.

Man kann aber auch unterschiedliche Materialien in verschiedenen Bereichen des Gehäuses vorsehen, indem man das Gehäuse aus mehreren axial aneinanderzufügenden Teilen herstellt. Vorzugsweise handelt es sich bei dem Material des Gehäuses um Keramik oder einen nicht-ferromagnetischen Stahl geringer elektrischer Leitfähigkeit. Bei Zweiteilung des Gehäuses in axialer Richtung wird im Bereich des Pumpenrades bevorzugt Gußstahl oder Gußeisen für das Gehäuse vorgesehen, während im Bereich des Elektromotors Keramik oder nicht-ferromagnetischer Stahl geringer elektrischer Leitfähigkeit vorgezogen wird.

Zum Halten der Dauermagnetpole am Rotor wird vorzugsweise am Außenumfang des Rotors eine dünne Bandage vorgesehen, z.B. aus faserverstärktem Kunststoff oder einem nicht-ferromagnetischen Stahl geringer elektrischer Leitfähigkeit.

Aus konstruktiven Gründen einerseits und aus Gründen einer hohen Lebensdauer andererseits kann man die Welle auf verschiedene Weise innerhalb des Gehäuses lagern.

In einer Variante ist die Welle beidseitig des Pumpenrades gelagert, während der Rotor fliegend angeordnet ist. Das heißt: Die Welle ist z.B. an einem von dem Rotor fernen Ende des Gehäuses und in einem mittleren Gehäusebereich gelagert, wobei zwischen diesen beiden Lagern das Pumpenrad fest auf der Welle sitzt. Auf der dem Pumpenrad gegenüberliegenden Seite des Lagers steht die Welle ein Stück aus dem Lager hervor, und an diesem freien Ende der Welle ist der Rotor bzw. sind die Rotoren befestigt.

Wenn mehrere Rotoren und Statoren vorgesehen sind, können diese auch symmetrisch auf beiden Seiten des Pumpenrades angeordnet sein.

Eine einfache Montage wird dadurch erreicht, daß die Statorteile in einem Statorträger befestigt sind, welcher an dem Gehäuse befestigt ist. Man kann die Statorteile auch an zwei Statorträgern befestigen, die beidseitig beispielsweise an einem Gehäuseflansch des Gehäuses befestigt werden. Die Statorträger können vorgefertigte Teile aus beispielsweise Kunststoff oder einem nicht-ferromagnetischen Stahl sein, wobei der Statorring mit seinen Spulenwicklungen fest mit dem Statorträger verschraubt ist. Der Statorträger läßt sich dann seinerseits mit über den Umfang verteilten Schrauben an einem Radialflansch des Gehäuses befestigen.

Der Statorträger umschließt topfförmig das Gehäuse über den gesamten Umfang, vorzugsweise auch an einer Stirnseite.

Durch die Erfindung ist es möglich, die Stromzuführungen zu den Spulenwicklungen des Stators ohne besondere Maßnahmen auszubilden, da eine Gehäusedurchführung nicht notwendig ist. Ohne besonderen Aufwand ist eine Flüssigkeitskühlung für den Stator vorgesehen.

Eine besonders kompakte Bauweise erzielt man, wenn der Außendurchmesser des Rotors (wenn nichts anderes gesagt ist, umfaßt hier der Begriff "der Rotor" auch die Ausführungsformen mit mehreren axial nebeneinanderliegenden Rotoren) größer oder höchstens gleich der Länge der Dauermagnetpole eines einzelnen Rotors in axialer Richtung ist. Der Durchmesser des Pumpenrades oder des pumpenseitigen Gehäuses soll etwa gleich dem Außendurchmesser des Statorträgers sein.

Um eine hohe Leistung des Motors zu erreichen, können die Dauermagnetpole auf dem Rotor von radial magnetisierten, hochkoerzitiven Dauermagneten des Typs Seltenerd-Metall mit radial innen angeordnetem ferromagnetischem Rückschluß gebildet werden.

Alternativ kann vorgesehen sein, daß die Dauermagnetpole auf dem Rotor durch in Umfangsrichtung magnetisierte hochkoerzitive Dauermagnete des Typs Seltenerd-Metall und ferromagnetische Flußkeile nach dem Flußsammlerprinzip gebildet werden.

Diese ferromagnetischen Flußkeile werden unten noch näher erläutert. Die Dauermagnete des Rotors sind in dem zur Rotorachse senkrechten Querschnitt etwas trapezförmig ausgebildet, wobei die kürzere Seite der beiden parallelen Trapezseiten radial außen liegt. Die Dauermagnete sind in Umfangsrichtung orientiert, wobei jeweils ein Nordpol eines Magneten einem Südpol des benachbarten Magneten gegenüberliegt und umgekehrt. Zwischen zwei benachbarten Dauermagneten befindet sich ein im Querschnitt dreieckiger Flußkeil, dessen Grundlinie radial außen liegt. Diese Basislinie ist weniger als halb so groß wie die radiale Höhe der einzelnen Magneten. Hierdurch ergibt sich eine Konzentration der Kraftlinien, die in radialer Richtung aus der Rotoroberfläche austreten.

Die Spulenwicklungen können in Nuten innerhalb des ferromagnetischen Rings angeordnet sein. Die Kommutierung innerhalb der Spulenwicklungen des Stators kann elektronisch erfolgen. Die Leistung und/oder die Drehzahl der Pumpe kann innerhalb des Betriebsbereichs stufenlos einstellbar sein.

Außer der Variante mit über den Umfang verteilten Dauermagneten des Rotors und radial außerhalb des Rotors angeordneten Statorteilen sieht die Erfindung auch eine andere Variante eines Elektromotors vor. Diese zeichnet sich dadurch aus, daß der Rotor aus einer Anzahl von sektorförmigen, zu einer Scheibe konfigurierten Dauermagnetpolen mit axialer Feldorientierung besteht, und daß der Stator stirnseitig an dem Gehäuse angeordnet ist und eine im wesentlichen der Polzahl des Rotors entsprechende Anzahl von im wesentlichen in einer Ebene angeordneten Spulenwicklungen aufweist.

Als Stellungsgebersystem kann ein auf induktiver Basis arbeitendes Auflösungssystem oder auch ein aus Hallsonden und rotierenden Steuerungsmagneten aufgebautes System vorgesehen werden.

Im folgenden werden Ausführungsbeispiele der Erfindung anhand der Zeichnungen näher erläutert. Es zeigen:
- **Fig. 1**: eine Längsschnittansicht durch einen Teil einer elektrischem Pumpe, wobei der Pumpenteil mit Pumpenrad weggelassen ist;
- **Fig. 2**: eine Längsschnittansicht entsprechend **Fig. 1** mit etwas anderer Ausgestaltung des Statorträgers;
- **Fig. 3**: einen Längsschnitt durch eine zweite Ausführungsform einer elektrischen Pumpe,
- **Fig. 4A**: eine Prinzip-Darstellung einer elektrischen Pumpe mit zwei Rotoren auf der die Rotoren und ein Pumpenrad tragenden Welle, wobei beide Rotoren auf derselben Seite des Pumpenrads liegen;
- **Fig. 4B**: eine ähnliche Ansicht wie **Fig. 4A**, wobei jedoch der eine Rotor auf der einen und der andere Rotor auf der anderen Seite des Pumpenrads angeordnet ist.
- **Fig. 5**: eine schematische Querschnittansicht des Rotors der elektrischen Pumpe, wobei die Anordnung der Dauermagneten des Rotors und zwischen den Dauermagneten liegender Flußkeile verdeutlicht ist, und
- **Fig. 6**: eine vergrößerte Querschnittdarstellung der in Fig. 5 dargestellten Dauermagneten und Flußkeile.

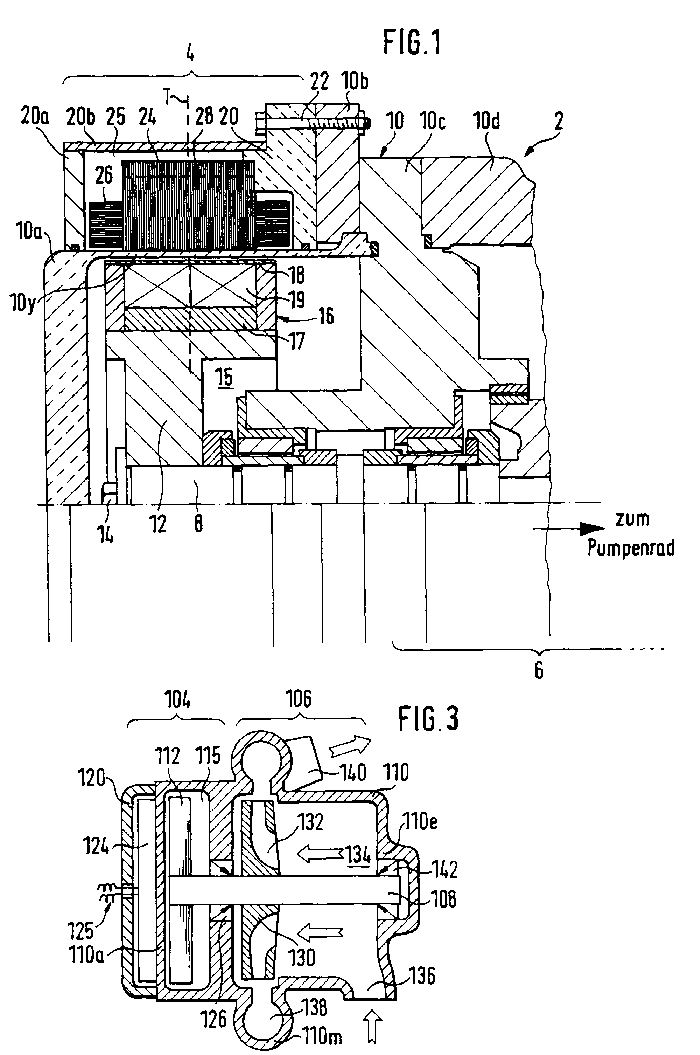

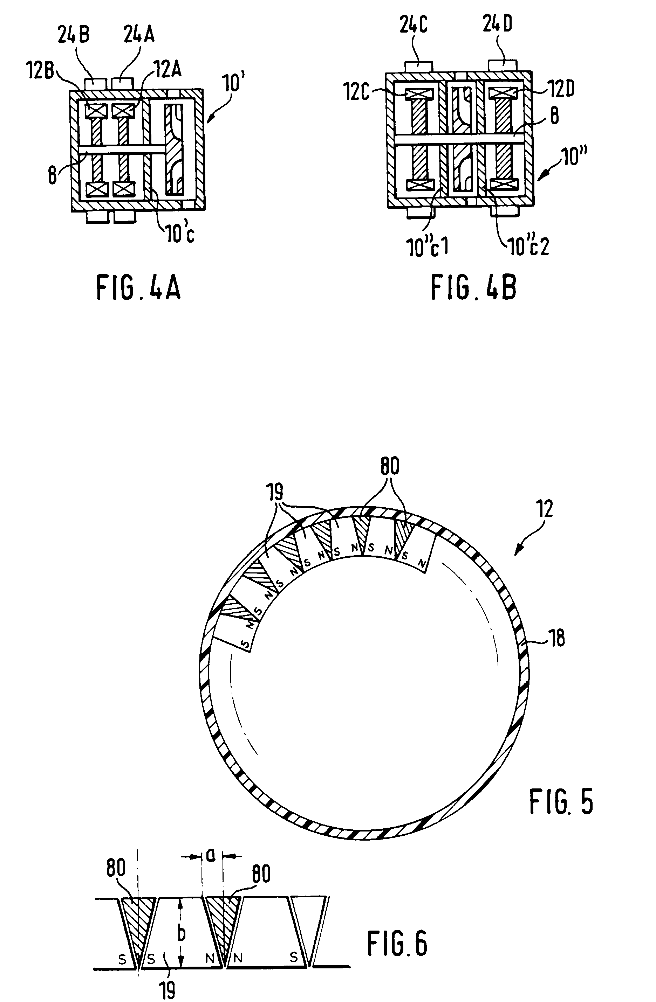

**Fig. 1** zeigt einen Längsschnitt durch eine elektrische Pumpe 2, wobei hier lediglich der Antriebsteil in Verbindung mit dem Gehäuse dargestellt ist. Rechts in **Fig. 1** schließt sich an den Elektromotor-Antriebsteil 4 ein Pumpenteil 6 an, dessen (nicht dargestelltes) Pumpenrad auf einer Welle 8 sitzt. Der Aufbau des Pumpenteils ist an sich bekannt und wird weiter unten in Verbindung mit **Fig. 3** nochmals kurz erläutert.

Ein (Pumpen-)Gehäuse 10 setzt sich aus mehreren Gehäuseteilen zusammen: Im Bereich des Elektromotor-Antriebsteils 4 ist ein aus Keramik bestehendes, etwa becherförmiges Gehäuseteil 10a vorgesehen, an dessen freiem Ende sich außen ein Ringflansch 10b und dann ein Mittelteil 10c anschließt. Dieses Mittelteil 10c besteht ebenso wie der Ringflansch 10b und das nach rechts anschließende Gehäuseteil 10d aus Gußeisen oder Gußstahl.

Die Welle 8 ist in einer Durchgangsbohrung des Gehäuseteils 10c drehbar gelagert. Die Welle steht bezüglich des Lagers links in eine Gehäusekammer 15 vor, wo an ihrem freien Ende mittels einer Befestigungsschraube 14 ein Rotor 12 befestigt ist.

Der Rotor besteht aus einem ringförmigen Teil aus nicht-ferromagnetischem Stahl und trägt auf seinem Umfang eine vorbestimmte Anzahl von Dauermagneten 19, unter denen sich zur Bildung von Dauermagnetpolen 16 Mittel 17 für einen ferromagnetischen Rückschluß befinden. Am Außenumfang werden die Dauermagnetpole 16 von einer Bandage 18 aus faserverstärktem Kunststoff gehalten.

Zwischen der Außenfläche des Rotors 12, d.h. zwischen der Außenseite der Bandage 18, und der Innenfläche des zylindermantelförmigen Abschnitts 10y des Gehäuseteils 10a befindet sich nur ein sehr kleiner Luftspalt.

Auf der Außenseite des zylindermantelförmigen Abschnitts 10y des Gehäuseteils 10a sitzt ein aus ferromagnetischem Material bestehender Ring 24, der den gesamten Gehäuseteil 10a über den Umfang umfaßt.

Der ferromagnetische Ring 24 enthält eine der Polpaarzahl des Rotors 12 in etwa entsprechende Anzahl von Spulenwicklungen 24.

Der Ring 24 ist mittels durch gestrichelte Linien 28 angedeuteter Schrauben axial an einem aus beispielsweise Kunststoff oder nicht-ferromagnetischem Stahl bestehendem Spulenträger 20 befestigt. Der Spulenträger 20 ist seinerseits mittels über den Umfang verteilter Schrauben 22 an dem Ringflansch 10b befestigt.

Zu dem Spulenträger 20 gehört eine äußere Radialwand 20a. Die den Ring 24 mit den Spulenwicklungen 26 aufnehmende Kammer 25 ist außen von einem Deckel 20b verschlossen.

In die Kammer 25 wird (von hier nicht dargestellten Mitteln) eine Kühlflussigkeit eingeleitet.

Nicht dargestellt in der Zeichnung sind die Anschlüsse für die Spulenwicklungen. Die Steuerelektronik für den Rotor befindet sich außerhalb des gesamten Gehäuses an einer entfernten Stelle.

Durch elektronische Kommutierung werden die Statorströme innerhalb der Spulenwicklungen - wie bei Elektromotoren üblich - so gesteuert, daß sich der Rotor 12 und mithin die Welle 8 dreht. Das Drehmoment wird auf das rechts in **Fig. 1** anschließende Pumpenrad übertragen.

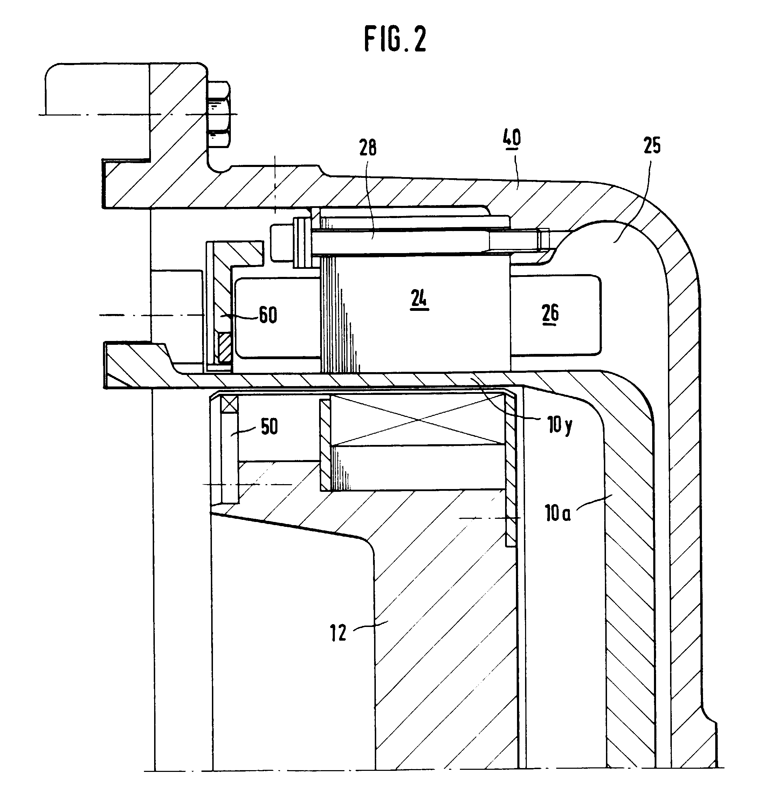

**Fig. 2** zeigt eine zu **Fig. 1** sehr ähnliche Ausgestaltung, mit dem Unterschied, daß ein Statorträger 40 komplett einstückig ausgeführt ist und die motorseitige Außenfläche 10a, 10y des Gehäuses vollständig umfaßt. Außerdem sind in **Fig. 2** Stellungsgebereinrichtungen eingetragen. Die Stellungseinrichtungen enthalten einen mit dem Rotor 12 gekoppelten und umlaufenden, Dauermagnete tragenden Ring 50 und einen diesem radial außen gegenüberliegenden Träger 60 mit Hallsonden, an denen die Dauermagnete vorbeilaufen.

**Fig. 3** zeigt eine andere Ausführungsform der Erfindung. Bevor die Besonderheiten dieser Ausführungsform erläutert werden, sei kurz auf den eigentlichen Pumpenteil eingegangen. In **Fig. 3** sind ähnliche Teile wie in **Fig. 1** und **Fig. 2** mit ähnlichen, jeweils um "100" erhöhten Bezugszeichen bezeichnet.

Gemäß **Fig. 3** ist in einem in Längsrichtung zusammenhängend ausgebildeten Gehäuse 110 eine Welle 108 in dem in **Fig. 3** links dargestellten Bereich (etwa zwischen Ende und Mitte der Welle) von einem radialen Innenflansch des Gehäuses und mittels eines Simmerrings 126 und außerdem in der rechten Stirnfläche 1101 des Gehäuses 110 mittels einer Lagerung 142 gelagert. Etwa mittig auf der Welle sitzt ein Pumpenrad 130, in welchem gekrümmte Kanäle 132 ausgebildet sind, die sich von einem axial orientierten Einlaß zu einem radial orientierten Auslaß am Umfang des Pumpenrades 130 erstrecken.

Zwischen dem Pumpenrad und der Stirnwand 110l des Gehäuses befindet sich eine Saugkammer 134, in die Pumpgut in Pfeilrichtung über einen Einlaß 136 eintreten kann. Durch die Drehung des Pumpenrades 130 wird das Pumpgut in Pfeilrichtung in die Kanäle 132 gesaugt und tritt aus den Kanälen in einen ringförmigen Kanal 138, der radial außerhalb des Pumpenrades 130 durch eine entsprechende Formung des Gehäuses an der Stelle ll0m gebildet ist.

Das Fluid wird auf der Druckseite, also aus dem Ringkanal 138, durch einen Auslaßstutzen 140 ausgetragen.

Die in **Fig. 1** und **Fig. 2** nur teilweise dargestellte Pumpe kann dort im Pumpenteil 6 ähnlich ausgebildet sein, wie es bei dem Pumpenteil 106 in **Fig. 3** der Fall ist.

Der Elektromotor-Antriebsteil 104 der in **Fig. 3** gezeigten elektrischen Pumpe unterscheidet sich von der Ausführungsform nach **Fig. 1** und **Fig. 2**.

Ein Rotor 112 besteht aus einer geraden Anzahl von sektorförmigen Dauermagneten, die axial orientiert sind. Die äußere Stirnfläche des Rotors 112 hat nur einen sehr geringen Abstand von der Innenseite der stirnseitigen Gehäusewand 110a.

Außen auf der Gehäusewand 110a sitzt in einem Statorhalter 120 ein Stator 124. Dieser Stator 124 enthält in nicht näher dargestellter Weise einen scheibenförmigen Spulenträger, auf dem Statorspulen ausgebildet sind.

Die Stromzuführungen für die Statorspulen sind bei 125 angedeutet.

Man erkennt, daß bei beiden Ausführungsformen die Welle 8 bzw. 108 vollständig in dem Gehäuse aufgenommen ist. Aus Fig. 3 ist außerdem ersichtlich, daß die Welle an keiner Stelle aus dem Gehäuse austritt. An den Anschluß 136 wird ebenso wie an den Auslaßstutzen 140 eine Rohrleitung angeschlossen. Damit ist keine Stelle des Gehäuses offen, so daß auch an keiner Stelle Pumpgut lecken kann. Sollte aus der Saugkammer 134 über die Dichtungsstelle des Simmerrings 126 in die den Rotor 112 aufnehmende Kammer 115 Pumpgut gelangen, so bildet sich am Boden der Kammer 115 ein Sumpf. Man kann einen mit Ventil versehenen Verbindungskanal zwischen der Kammer 115 und dem Ringkanal 138 vorsehen, um leckendes Fluid aus der Kammer 115 zu entfernen, wie dies im Prinzip in der DE-A-41 11 713 beschrieben ist.

Bei den oben beschriebenen Ausführungsformen trägt die das Pumpenrad antreibende Welle 8 einen Rotor 12 in der durch die Gehäusewand 10c abgetrennten Kammer, die in **Fig. 1** links dargestellt ist. In einer der möglichen abgewandelten Ausführungsformen der Erfindung sitzen auf der Welle 8 nebeneinander zwei Rotoren, wie dies in **Fig. 4A** dargestellt ist. Links bezüglich der Gehäusewand 10c sitzen auf der Welle 8 ein rechter Rotor 12A und ein linker Rotor 12B. Hiermit ausgerichtet sind auf der Außenwand des Gehäuses 10' ein Stator 24A bzw. ein Stator 24B angeordnet.

**Fig. 4B** zeigt eine abgewandelte Ausführungsform, bei der ebenfalls zwei Rotoren und zwei Statoren vorgesehen sind, wobei sich jedoch hier das Pumpenrad zwischen den Rotoren befindet. Zur Trennung in Kammern für die Rotoren einerseits und für das Pumpenrad andererseits besitzt das Gehäuse 10" zwei Trennwände 10"c1 und 10"c2 zur Bildung einer linken und einer rechten Kammer, die jeweils einen Rotor 12C bzw. 12D aufnehmen. Ausgerichtet mit diesen Rotoren befinden sich auf der Außenseite des Gehäuses 10" Statoren 24C bzw. 25D.

Die Welle 8 ist bei der Ausführungsform nach **Fig. 4A** in der linken Stirnseite des Gehäuses 10' und in der Gehäusewand 10'c gelagert. Bei der Ausführungsform nach **Fig. 4B** ist die Welle in beiden Stirnseiten des Gehäuses 10" und außerdem in den beiden Gehäusewänden 10"c1 und 10"c2 gelagert.

Eine Besonderheit der Erfindung ist in der oben bereits angesprochenen, speziellen Ausgestaltung des Rotors 12 zu sehen. Gemäß **Fig. 5** sind die Dauermagneten 19 des Rotors 12 im Querschnitt senkrecht zur Drehachse des Rotors rechteckig, vorzugsweise etwas trapezförmig ausgebildet, wobei die schmalere Seite der beiden parallelen Seiten des Trapezes radial außen liegt, also in Nachbarschaft der Bandage 18 gemäß **Fig. 5**. Die Magnete sind in Umfangsrichtung orientiert, d.h., in benachbarten Dauermagneten 19 sind jeweils Nord- und Südpol einander zugewandt.

In den zwischen den Dauermagneten 19 gebildeten Lücken befinden sich im Querschnitt dreieckige Flußleitkeile 80, die auf der Außenseite des Rotors, d.h., innen an der Bandage 18, bündig mit den Außenflächen der Dauermagneten 19 abschließen.

Wie im einzelnen in **Fig. 6** dargestellt ist, haben die Dauermagneten 19 eine radiale Höhe b, während die außen befindliche Fläche der Flußleitkeile 80 eine Breite 2a besitzt. Der Querschnitt der Dauermagneten 19 und der Flußleitkeile 80 ist so gewählt, daß die Höhe b größer ist als der Wert a, also größer als die halbe Breite der Flußleitkeile 80. Durch diese Maßnahme wird erreicht, daß sich die durch die Flußleitkeile 80 nach oben, also in radialer Richtung umgelenkten Kraftlinien im Bereich der Austrittsflächen der Flußleitkeile 80 stark konzentrieren.

## Patentansprüche

1. Elektrische Pumpe, mit einem Pumpenrad (130), das über eine Welle (8;108) mit mindestens einem Permanentmagnet-Rotor (12;112) eines Elektromotors (4;104) gekoppelt ist, einem hermetisch abgeschlossenen Gehäuse (10;110), in welchem die Welle (8;108) gelagert ist, und das als Öffnungen den druckseitigen und den saugseitigen Anschluß (140;136) für das Pumpgut aufweist, wobei
der Rotor (12;112) im Inneren und die Statorteile des Stators (24,26;124) des Elektromotors außerhalb des Gehäuses (10;110) angeordnet sind,
**dadurch gekennzeichnet**,
daß die Statorteile in einem oder mehreren an dem Gehäuse befestigten Statorträgern (20;120) befestigt sind, der bzw. die jeweils einstückig derart ausgebildet sind, daß sie das Gehäuse über den gesamten Umfang, vorzugsweise einschließlich einer Stirnseite des Gehäuses, topfförmig umschließen, und daß der bzw. die Statorträger eine Flüssigkeitskühlung für die Statorteile aufweisen.

2. Pumpe nach Anspruch 1,
**dadurch gekennzeichnet**,
daß der Rotor aus mit radialem Abstand von der Welle über den Umfang verteilt angeordneten, radial orientierten Dauermagnetpolen (16) wechselnder Polarität besteht, und
daß der Stator als axial mit dem Rotor (12) ausgerichteter ferromagnetischer Ring (24) mit Spulenwicklungen (26) außerhalb der Gehäusewand (10y) gelagert ist.

3. Pumpe nach Anspruch 2,
**dadurch gekennzeichnet**,
daß mehrere Rotoren auf der Welle axial nebeneinander angeordnet sind, und jedem Rotor ein Stator zugeordnet ist.

4. Pumpe nach Anspruch 2 und 3,
**dadurch gekennzeichnet**,
daß die Dicke des Gehäuses (10) im axialen Bereich der Dauermagnetpole (16) des Rotors in radialer Richtung zwischen Dauermagnetpolen und Stator unterhalb von 10 mm, bevorzugt unter 5 mm, liegt.

5. Pumpe nach einem der Ansprüche 1 bis 4,
**dadurch gekennzeichnet**,
daß das Material des Gehäuses (10;110) Keramik oder nicht-ferromagnetischer Stahl niedriger elektrischer Leitfähigkeit ist.

6. Pumpe nach Anspruch 5,
**dadurch gekennzeichnet**,
daß das Gehäuse zweiteilig ausgebildet ist, wobei es im Bereich des Pumpenrades bevorzugt aus Gußstahl oder Gußeisen und im Bereich des Rotors aus Keramik oder nicht-ferromagnetischem Stahl niedriger elektrischer Leitfähigkeit besteht.

7. Pumpe nach einem der Ansprüche 2 bis 6,
**dadurch gekennzeichnet**,
daß die Dauermagnetpole an ihrem Außenumfang von einer Bandage (18) umhüllt sind.

8. Pumpe nach Anspruch 7,
**dadurch gekennzeichnet**,
daß das Material der Bandage (18) faserverstärkter Kunststoff oder nicht-ferromagnetischer Stahl niedriger elektrischer Leitfähigkeit ist.

9. Pumpe nach einem der Ansprüche 1 bis 8,
**dadurch gekennzeichnet**,
daß die Welle (8;108) beidseitig des Pumpenrades (130) gelagert ist, und der (die) Rotor(en) (12;112) fliegend angeordnet ist (sind).

10. Pumpe nach einem der Ansprüche 3 bis 9,
**dadurch gekennzeichnet**,
daß bei mehreren Rotoren und zugeordneten Statorteilen diese auf einer Seite bezüglich des Pumpenrades auf der Welle angeordnet sind.

11. Pumpe nach einem der Ansprüche 3 bis 9,
**dadurch gekennzeichnet**,
daß bei mehreren Rotoren und zugeordneten Statorteilen diese symmetrisch auf beiden Seiten des Pumpenrades auf der Welle angeordnet sind.

12. Pumpe nach einem der Ansprüche 1 bis 11,
**dadurch gekennzeichnet**,
daß die Statorteile in zwei Statorträgern befestigt sind, welche beidseitig an dem Gehäuse befestigt sind.

13. Pumpe nach einem der Ansprüche 1 und 12,
**dadurch gekennzeichnet**,
daß der bzw. die Statorträger mittels axial gerichteter Schrauben (22) an einem bzw. mehreren Radialflanschen (10b) des Gehäuses angeschraubt sind.

14. Pumpe nach einem der Ansprüche 2 bis 13,
**dadurch gekennzeichnet**,
daß der Außendurchmesser des Rotors größer oder höchstens gleich der Länge der Dauermagnetpole eines einzelnen Rotors in axialer Richtung ist.

15. Pumpe nach einem der Ansprüche 1 bis 14,
**dadurch gekennzeichnet**,
daß der Durchmesser des Pumpenrades oder des pumpenseitigen Gehäuses etwa gleich dem Außendurchmesser des Statorträgers ist.

16. Pumpe nach einem der Ansprüche 2 bis 15,
**dadurch gekennzeichnet**,
daß die Dauermagnetpole (16) auf dem Rotor von radial magnetisierten, hochkoerzitiven Dauermagneten des Typs Seltenerd-Metall mit radial innen angeordnetem, ferromagnetischem Rückschluß (17) gebildet werden.

17. Pumpe nach einem der Ansprüche 2 bis 16,
**dadurch gekennzeichnet**,
daß die Dauermagnetpole auf dem Rotor durch in Umfangsrichtung magnetisierte, hochkoerzitive Dauermagnete des Typ Seltenerd-Metall und ferromagnetische Flußkeile nach dem Flußsammlerprinzip gebildet werden.

18. Pumpe nach einem der Ansprüche 2 bis 17,
**dadurch gekennzeichnet**,
daß die Spulenwicklungen (26) in Nuten innerhalb des ferromagnetischen Rings (24) angeordnet sind.

19. Pumpe nach einem der Ansprüche 2 bis 18,
**dadurch gekennzeichnet**,
daß die Ständerströme innerhalb der Spulenwicklungen (26) des Stators elektronisch kommutiert werden.

20. Pumpe nach einem der Ansprüche 1 bis 19,
**dadurch gekennzeichnet**,
daß die Leistung und die Drehzahl der Pumpe innerhalb des Betriebsbereichs stufenlos einstellbar sind.

21. Pumpe nach Anspruch 1,
**dadurch gekennzeichnet**,
daß der Rotor (112) aus einer Anzahl von sektorförmigen, zu einer Scheibe konfigurierten Dauermagnetpolen mit vorzugsweise axialer Magnetisierungsrichtung besteht, und daß der Stator stirnseitig an dem Gehäuse (110,110a) angeordnet ist, und eine im wesentlichen der Polzahl des Rotors (112) entsprechende Anzahl von im wesentlichen in einer Ebene angeordneten Spulenwicklungen aufweist.

22. Pumpe nach Anspruch 1 bis 21,
**dadurch gekennzeichnet**,
daß ein induktiv arbeitendes oder aus Dauermagnetpolen und Hallsensoren bestehendes Rotorstellungsgebersystem vorgesehen ist, wobei der stehende Teil außerhalb des Gehäuses (10y) im Bereich des Statorträgers angeordnet ist.

## Claims

1. An electric pump comprising an impeller (130) coupled via a shaft (8; 108) to at least one permanent magnet rotor (12; 112) of an electric motor (4; 104), a hermetically sealed housing (10; 110) in which said shaft (8; 108) is supported and which has as openings the delivery side and the suction side connections (140; 136) for the material to be pumped,
with the rotor (12; 112) being disposed inside the housing (10; 110) and the stator parts of the stator (24, 26; 124) of the electric motor being disposed outside the housing (10; 110),
**characterized** in
that the stator parts are mounted in one or several stator carriers (20; 120) attached to the housing, said stator carrier or carriers each being of one-piece configuration so as to enclose the housing across the entire circumference thereof in a cup-shaped manner, preferably including a face side of the housing, and in that the stator carrier or carriers has/have a liquid cooling means for the stator parts.

2. A pump according to claim 1,
characterized in that the rotor consists of circumferentially distributed, radially oriented permanent magnet poles (16) of alternating polarity which are radially spaced from the shaft, and
in that the stator in the form of a ferromagnetic ring (24) axially aligned with the rotor (12) and having coil windings (26) is supported outside of the housing wall (10y).

3. A pump according to claim 2,
characterized in that a plurality of rotors is disposed on the shaft axially beside each other and each rotor has a stator associated therewith.

4. A pump according to claims 2 and 3,
characterized in that the thickness of the housing (10) in the axial portion of the permanent magnet poles (16) of the rotor in radial direction between permanent magnet poles and stator is below 10 mm, preferably below 5 mm.

5. A pump according to any one of claims 1 to 4,
characterized in that the material of the housing (10; 110) is ceramics or non-ferromagnetic steel of low electrical conductivity.

6. A pump according to claim 5,
characterized in that the housing is of two-part design, with the housing consisting in the region of the impeller preferably of cast steel or cast iron and in the region of the rotor of ceramics or non-ferromagnetic steel of low electrical conductivity.

7. A pump according to any one of claims 2 to 6,
characterized in that the permanent magnet poles are surrounded by a band (18) on their outer circumference.

8. A pump according to claim 7,
characterized in that the material of said band (18) is fiber-reinforced plastics material or non-ferromagnetic steel of low electrical conductivity.

9. A pump according to any one of claims 1 to 8,
characterized in that the shaft (8; 108) is supported on both sides of the impeller (130) and the rotor(s) (12; 112) is (are) disposed in cantilever fashion.

10. A pump according to any one of claims 3 to 9,
characterized in that with several rotors and associated stator parts these are arranged on the shaft on one side with respect to the impeller.

11. A pump according to any one of claims 3 to 9,
characterized in that with several rotors and associated stator parts these are arranged on the shaft symmetrically on both sides of the impeller.

12. A pump according to any one of claims 1 to 11,
characterized in that the stator parts are mounted in two stator carriers attached to the housing on both sides thereof.

13. A pump according to any one of claims 1 and 12,
characterized in that the stator carrier or carriers is/are threaded by means of axially directed screws (22) to one or several radial flanges (10b) of the housing, respectively.

14. A pump according to any one of claims 2 to 13,
characterized in that the outer diameter of the rotor is greater or at the most equal to the length of the permanent magnet poles of one single rotor in axial direction.

15. A pump according to any one of claims 1 to 14,
characterized in that the diameter of the impeller or of the housing on the pump side is approximately equal to the outside diameter of the stator carrier.

16. A pump according to any one of claims 2 to 15,
characterized in that the permanent magnet poles (16) on the rotor are constituted by radially magnetized, highly coercive permanent magnets of the rare earths metal type, with a ferromagnetic return path (17) disposed radially inside.

17. A pump according to any one of claims 2 to 16,
characterized in that the permanent magnet poles on the rotor are constituted by circumferentially magnetized, highly coercive permanent magnets of the rare earths metal type and ferromagnetic flux wedges according to the flux collecting principle.

18. A pump according to any one of claims 2 to 17,
characterized in that the coil windings (26) are disposed in grooves within the ferromagnetic ring (24).

19. A pump according to any one of claims 2 to 18,
characterized in that the stator currents within the coil windings (26) of the stator are electronically commutated.

20. A pump according to any one of claims 1 to 19,
characterized in that the power and the speed of the pump are infinitely variable within the operating range thereof.

21. A pump according to claim 1,
characterized in that the rotor (112) consists of a number of sector-shaped permanent magnet poles configured in the form of a disc and having preferably an axial direction of magnetization, and in that the stator is disposed on a face side of the housing (10, 110a) and has a number of coil windings disposed substantially in one plane, with the number thereof corresponding substantially to the pole number of the rotor (112).

22. A pump according to claims 1 to 21,
characterized in that a rotor position indicator system is provided which operates either on the basis of induction or consists of permanent magnet poles and Hall probes, with the stationary part being disposed outside of the housing (10y) in the region of the stator carrier.

## Revendications

1. Pompe électrique, avec une roue de pompe (130), couplée, par l'intermédiaire d'un arbre (8; 108), à au moins un rotor à aimants permanents (12; 112) appartenant à un moteur électrique (4; 104), avec un carter (10; 110) fermé hermétiquement, dans lequel l'arbre (8; 108) est monté à rotation et qui présente, à titre d'ouvertures, les raccordements (140; 136), situés côté refoulement et côté aspiration, pour le produit à pomper, où
le rotor (12; 112) est disposé à l'intérieur et les parties stator du stator (24, 26; 124) du moteur électrique sont disposées à l'extérieur du carter (10; 110),
caractérisée en ce que
les parties de stator sont fixées dans un ou plusieurs supports de stator (20; 120) fixés au carter, partie(s) de stator réalisée(s) chacune d'une seule pièce de manière qu'elles enclosent en forme de pot le carter sur toute la périphérie, de préférence y compris une face frontale du carter, et en ce que le ou les support(s) de stator présente(nt) un refroidissement par liquide, destiné aux parties de stator.

2. Pompe selon la revendication 1,
caractérisée en ce que
le rotor est constitué de pôles à aimants permanents (16) à polarité alternées, qui sont orientés radialement et sont disposés avec un espacement radial vis-à-vis de l'arbre, en étant répartis sur la périphérie, et
en ce que le stator est monté à rotation à l'extérieur de la paroi de carter (10y), sous la forme d'un anneau (24) ferromagnétique, aligné vis-à-vis du rotor (12) et équipé d'enroulements de bobine (26).

3. Pompe selon la revendication 2,
caractérisée en ce que
plusieurs rotors sont disposés les uns à côtés des autres axialement sur l'arbre et un stator étant associé à chaque rotor.

4. Pompe selon les revendications 2 et 3,
caractérisée en ce que
l'épaisseur du carter (10), dans la zone axiale du pôle à aimants permanents (16) du rotor, est, en direction radiale, entre des pôles à aimants permanents et le stator, inférieure à 10 mm, de préférence inférieure à 5 mm.

5. Pompe selon l'une des revendications 1 à 4,
caractérisée en ce que
le matériau du carter (10; 110) est une céramique ou bien un acier non ferromagnétique ayant une faible conductibilité électrique.

6. Pompe selon la revendication 5,
caractérisée en ce que
le carter est réalisé en deux parties, en étant constitué dans la zone de la roue de pompe, de préférence en acier moulé ou en fonte de fer, et, dans la zone du rotor, en céramique ou en acier non ferromagnétique à faible conductibilité électrique.

7. Pompe selon l'une des revendications 2 à 6,
caractérisée en ce que
les pôles à aimants permanents sont enveloppés d'un bandage (18) sur leur périphérie extérieure.

8. Pompe selon la revendication 7,
caractérisée en ce que
le matériau du bandage (18) est une matière synthétique renforcée par des fibres ou bien un acier non ferromagnétique ayant une faible conductibilité électrique.

9. Pompe selon l'une des revendications 1 à 8,
caractérisée en ce que
l'arbre (8; 108) est monté à rotation de part et d'autre de la roue de pompe (130) et le (les) rotor(s) (12; 112) est (sont) disposé(s) en porte-à-faux.

10. Pompe selon l'une des revendications 3 à 9,
caractérisée en ce que
dans le cas où il y a plusieurs rotors et plusieurs parties de stator associées, ces éléments sont disposés sur un côté par rapport à la roue de pompe, sur l'arbre.

11. Pompe selon l'une des revendications 3 à 9,
caractérisée en ce que,
lorsqu'il y a plusieurs rotors et plusieurs parties de stator associées, ces éléments sont disposés symétriquement des deux côtés de la roue de pompe, sur l'arbre;

12. Pompe selon l'une des revendications 1 à 11,
caractérisée en ce que
les parties de stator sont fixées dans deux supports de rotor qui sont fixées de part et d'autre sur le carter.

13. Pompe selon l'une des revendications 1 et 12,
caractérisée en ce que
le ou les support(s) de stator est (sont) vissé(s) sur une ou plusieurs brides radiales (10b) du carter, au moyen de vis (22) orientées axialement.

14. Pompe selon l'une des revendications 2 à 13,
caractérisée en ce que
le diamètre extérieur du rotor est supérieur ou au plus égal à la longueur du pôle à aimants permanents d'un rotor individuel, en direction axiale.

15. Pompe selon l'une des revendications 1 à 14,
caractérisée en ce que
le diamètre de la roue de pompe ou du carter situé coté pompe est à peu près égal au diamètre extérieur du support de rotor.

16. Pompe selon l'une des revendications 2 à 15,
caractérisée en ce que
le pôle à aimants permanents (16) est constitué sur le rotor par des aimants permanents fortement coercitifs, magnétisés radialement, du type terre rare-métal avec un retour de flux (17) ferromagnétique disposé radialement à l'intérieur.

17. Pompe selon l'une des revendications 2 à 16,
caractérisée en ce que
les pôles à aimants permanents sont constitués sur le rotor par des aimants permanents fortement coercitifs, magnétisés en direction périphérique, du type terre rare-métal, et d'éléments cunéiformes de flux, ferromagnétiques, conçus selon le principe du collecteur de flux.

18. Pompe selon l'une des revendications 2 à 17,
caractérisée en ce que
les enroulements de bobine (26) sont disposés dans des rainures se trouvant à l'intérieur de l'anneau ferromagnétique (24).

19. Pompe selon l'une des revendications 2 à 18,
caractérisée en ce que
les courants stator sont commutés électroniquement à l'intérieur des enroulements de bobine (26) du stator.

20. Pompe selon l'une des revendications 1 à 19,
caractérisée en ce que
la puissance et la vitesse de rotation de la pompe sont réglables de façon progressive continue dans les limites de la plage de fonctionnement.

21. Pompe selon la revendication 1,
caractérisée en ce que
le rotor (112) est constitué d'un nombre donné de pôles d'aimants permanents en forme de secteurs, donnant ensemble un disque, ayant une direction de magnétisation de préférence axiale, et en ce que le stator est disposé frontalement sur le carter (110; 110a) et présente un nombre, correspondant sensiblement au nombre de pôles du rotor (112), d'enroulements de bobine disposés sensiblement dans un plan.

22. Pompe selon les revendications 1 à 21,
caractérisée en ce qu'
est prévu un système de capteurs de position de rotor, travaillant de façon inductive ou constitué de pôles d'aimants permanents et de capteurs à effet Hall, la partie fixe étant disposée à l'extérieur du carter (10y), dans la zone du support de stator.
